# EUROPEAN PATENT APPLICATION

(11) **EP 1 103 448 A1**
(43) Date of publication of application: **30.05.2001**
(21) Application number: 00123951.6
(22) Date of filing: 03.11.2000
(51) Int. Cl.: B62D 25/10

(54) **Vehicle engine enclosure assembly and vehicle with an engine enclosure**

(30) Priority: 23.11.1999 US 447406
(71) Applicant: DEERE & COMPANY, Moline, Illinois 61265-8098 (US)
(72) Inventor: Klein, Arthur Lewis, Cedar Falls, IA 50613 (US)
(74) Representative: Lau-Loskill, Philipp, Dipl.-Phys.

(57) **Abstract**

An enclosure assembly for a vehicle (10) includes a molded hood (22) attached to an enclosure frame (30) having both a stationary frame portion (32) and a movable frame portion (34). The movable frame portion (34) is hinged to the stationary frame portion (32) and gas assist springs (84, 86) interconnect the stationary and movable frame portions (32, 34). A latch assembly includes a striker (90) mounted to one of the stationary or movable frame portions (32, 34) while a latch mechanism is mounted to the other to engage and lock the striker (90) in place, thereby holding the movable frame portion (34) fixed relative to the stationary frame portion (32). The entire assembly is attached to the chassis (12) by bolting the stationary frame portion (32) to the chassis (12). The enclosure frame (30) is assembled as a subassembly with the attachment locations of the stationary frame portion (32) properly oriented relative to the chassis (12) to ensure proper fit of the hood enclosure assembly.

## Description

The present invention relates to an engine enclosure assembly for a work vehicle, and in particular to an assembly having an enclosure frame that includes an enclosure frame comprising a movable frame portion which is pivotal relative to the vehicle chassis. An enclosure hood is mounted to the movable frame portion. A latch mechanism holds the movable frame portions fixed to its closed position while gas springs facilitate lifting of the movable frame portion and hood when the latch is released. The present invention relates further to a work vehicle, in particular to a tractor having an enclosure assembly.

Engine enclosures for tractors are known as shown in US-A-5,538,097. Such an engine enclosure includes a molded plastic hood having a contoured surface to provide a pleasing aesthetic appearance to the tractor. An aluminum hinge casting is attached to the hood to pivotally attach the hood to a hinge support fastened to the chassis sub-frame. The hood also carries a striker that engages a latching mechanism mounted to the chassis sub-frame. Gas springs are provided between the chassis sub-frame and the hood frame to facilitate lifting of the hood.

When mounting the hood to the tractor chassis, it is necessary that the hinge, the latch and the gas spring components are all correctly aligned with the mating components on the tractor chassis. Large and costly fixtures are often needed to ensure the proper alignment of components. Adjustment capability is often needed in the hood and mounting components to achieve the proper alignment. This is evidenced in the above referenced patent by the adjustment capability in the hinge support.

It is an object of the present invention to provide an engine enclosure assembly and a vehicle with an engine enclosure assembly with which the recited problems and in particular the assembly difficulties of the prior art hood enclosure are overcome.

These and other objects are achieved by the present invention according one of the claims 1, 10 or 15. Further advantageous arrangements and developments of the invention appear from the dependent claims.

In an advantageous embodiment of the present invention the enclosure assembly includes a molded hood attached to an enclosure frame. The enclosure frame has both a stationary frame portion and a movable frame portion. The movable frame portion is hinged to the stationary frame portion and the gas assist springs interconnect the stationary and movable frame portions. The latch assembly includes a striker mounted to one of the stationary or movable frame portions while a latch mechanism is mounted to the other to engage and lock the striker in place, thereby holding the movable frame portion fixed relative to the stationary frame portion. The entire assembly is then attached to the vehicle chassis by bolting the stationary frame portion to the vehicle chassis. The enclosure frame is assembled as a subassembly with the attachment locations of the stationary frame portion properly to fit onto the vehicle or tractor chassis.

The engine enclosure assembly of the present invention is analogous to a pre-hung door in which all of the hardware, i.e. the hinge, latch and assist spring are preset as a subassembly. With a pre-hung door, installation only requires that the doorframe be set in the opening. The hardware is already aligned and set in place for proper operation.

In addition to easier assembly, other advantages flow from the present invention. A cost savings is realized from the elimination of large assembly fixtures. Further, the end user now has the ability to disassemble and reassemble the enclosure without disrupting "factory settings."

In an alternate embodiment of the invention, the stationary frame portion is also pivotally attached to the vehicle chassis. During major service operations on the vehicle, it is possible to release the bolts attaching the stationary frame portion to the vehicle chassis and pivot the entire assembly about the pivotal attachment. This moves the hood away from the engine to provide full access to the sides and top of the engine as may be necessary when removing the engine from the vehicle chassis.

The invention and further advantageous developments and arrangements of the invention will now be described and explained in more detail by way of example and with reference to the accompanying drawings in which:
- Figure 1: is a side elevational view of a tractor incorporating the hood enclosure assembly of the present invention illustrating the hood in multiple positions,
- Figure 2: is a side view of the frame of the hood enclosure assembly of the present invention,
- Figure 3: is a perspective view of the frame of the hood enclosure assembly of the present invention,
- Figure 4: is an enlarged side view of a tractor chassis and hood with the hood in a raised position and with the right side of the hood removed to illustrate the assembly components inside the hood,
- Figure 5: i is a perspective view of the hood enclosure assembly of the present invention in a raised position with a portion of the hood and front grill removed to illustrate the frame of the assembly, and
- Figure 6: is an enlarged side view of a tractor chassis and hood, like Fig. 4, with the hood in a forward tilted, full access position and with the right side of the hood removed to illustrate the assembly components inside the hood.

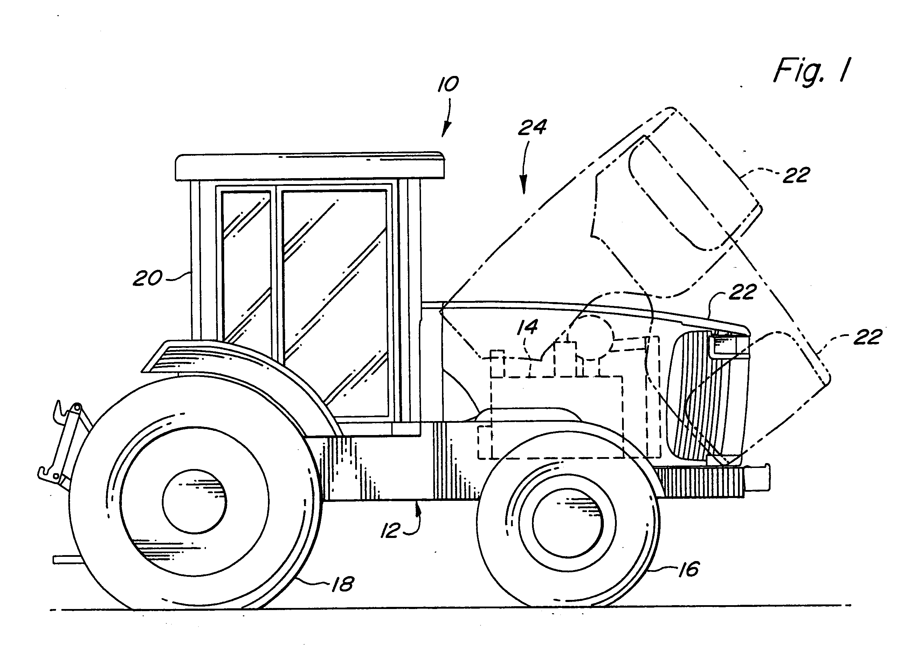

With reference to Figure 1, an agricultural tractor 10 is shown which contains the engine enclosure assembly of the present invention. The tractor 10 includes a tractor chassis 12 to which is mounted an engine 14, front and rear wheels 16,18, respectively, and an operator's cab 20. A hood 22 is part of an engine enclosure assembly 24 of the present invention that is mounted to the tractor chassis 12.

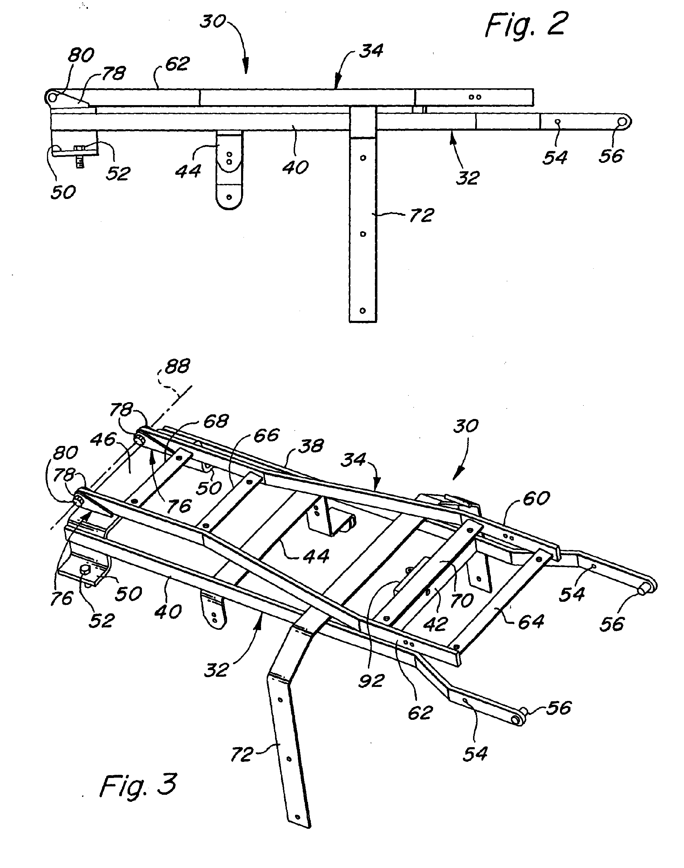

The enclosure assembly includes a frame 30 shown in Figures 2 and 3. The enclosure frame 30 includes a stationary frame portion 32 and a movable frame portion 34. The stationary frame portion has a pair of fore and aft extending side members 38 and 40 that are coupled together by three cross members, a front cross member 42, an intermediate cross member 44 and a rear cross member 46. The rear cross member 46 has two lower feet 50 that extend outwardly beyond the side members 38 and 40. The feet 50 have apertures to receive bolts 52 (only one is shown) that are used to mount the enclosure assembly to the tractor chassis 12 as described below.

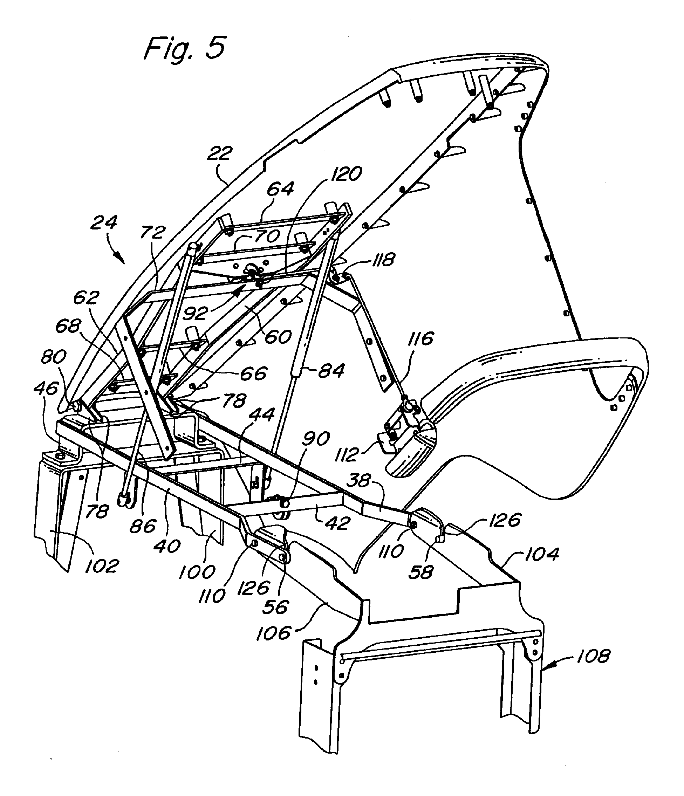

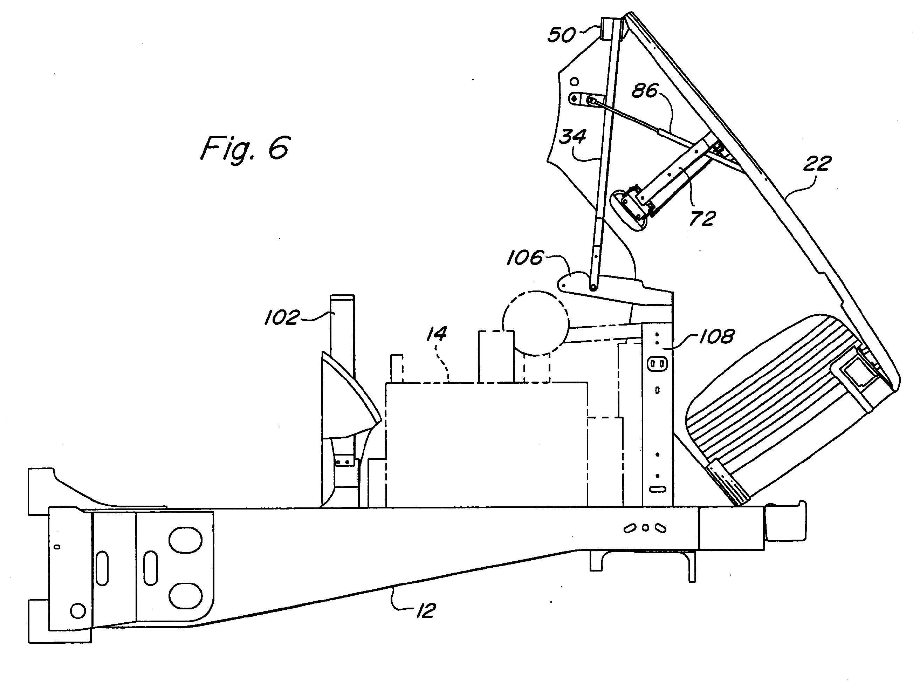

The side members 38 and 40, near their forward ends, contain apertures 54 that receive extending horizontally bolts 110, shown in Figure 5, to attach the forward end of the stationary frame portion 32 to the tractor chassis 12. In addition, at the forward ends of the side members, the side members are equipped with horizontal pivot posts 56 that are used to pivot the enclosure assembly as described below in connection with Figure 6.

The movable frame portion 34 also has a pair of fore and aft extending side members 60, 62. The side members 60, 62 are connected by a plurality of cross members 64, 66 and 68. A latch mounting bracket 70 also extends between the side members 60, 62 and is connected thereto. Furthermore, a U-shaped hood mounting bracket 72 is connected to the side members 60, 62. Both the stationary and movable frame portions 32, 34 are preferably constructed by welding the various components together. Other construction methods may be used with the end result being a structural frame to support the molded hood 22.

A pair of hinge brackets 76 are fixed to the rear cross member 46 of the stationary frame portion. Each hinge bracket 76 has a pair of spaced-apart, upstanding plates 78 that receive the rearward ends of the side members 60, 62 of the movable frame portion 34 therebetween. A pivot member 80 extends through the hinge brackets and the side members 60, 62 to pivotally couple the movable frame portion 34 to the stationary frame portion 32.

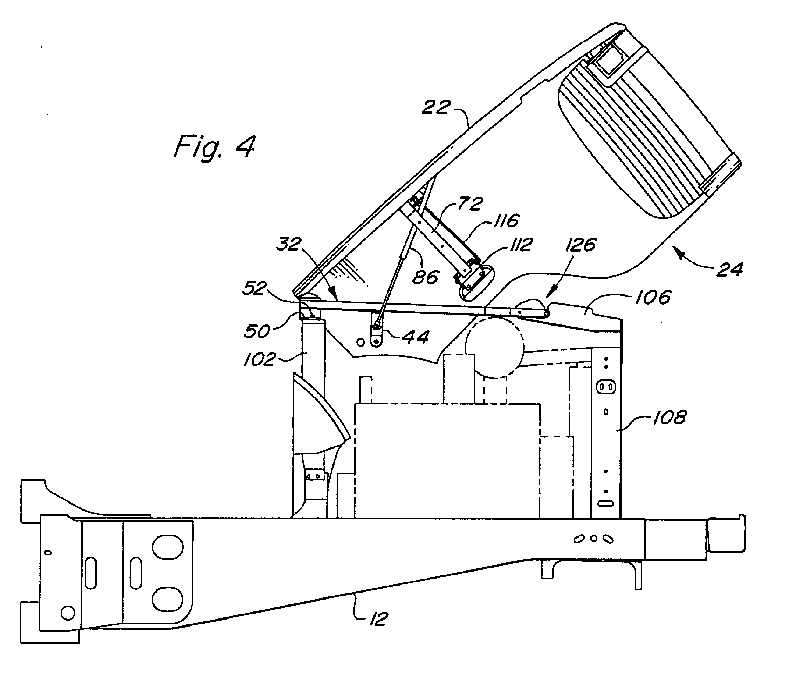

A pair of gas assist springs 84, 86, shown only in Figures 4 and 5, are coupled to the intermediate cross member 44 of the stationary frame portion and the side members 60, 62 of the movable frame portion 34. The gas springs urge the movable frame portion 34 to a raised position relative to the stationary portion as shown in Figures 4 and 5. Other types of biasing springs may be used to help lift the hood 22 such as torsion springs, clock springs, coil springs, over center springs, etc.

A latch assembly is provided to hold the movable frame portion in a fixed position relative to the stationary frame portion, in opposition to the gas springs 84, 86. The latch assembly includes a striker 90 (Fig. 5) mounted to the front cross member 42 of the stationary frame portion. A latch mechanism 92 is carried by the latch mounting bracket 70 of the movable frame portion 34. The latch mechanism 92 and striker are aligned with one another such that the striker is received by the latch mechanism for locking engagement therewith. When the striker is latched, the movable frame portion 34 is fixed in position relative to the stationary frame portion 32.

The stationary and movable frame portions 32, 34 are assembled separately and then joined to one another in a fixture that enables the connecting points to be aligned relative to one another and permanently set in place. These connecting points include the hinge, the latch mechanism and striker, and the gas assist springs. By aligning these connections with one another in a fixture, proper aligned is ensured.

The hood 20 is fastened to the hood mounting bracket 72, the cross members 64, 66 and 68 and also to the latch mounting bracket 70. Thus, as the movable frame portion 34 rotates about a first axis 88, defined by the pivot members 80, the hood 22 is moved as well.

The entire enclosure assembly, consisting of the enclosure frame 30 with the hood 22 mounted thereon, is mounted to the tractor by attaching the rear cross member 46 to the upright rear hood supports 100, 102 of the tractor chassis 12. The front ends of the side members 38, 40 are attached to brackets 104, 106 of the radiator support sub-frame 108. Once the stationary portion 32 is mounted to the tractor chassis 12, the hood can be raised and lowered by rotation of the movable frame portion 34 relative to the stationary frame portion 32. The upright rear hood supports are behind the engine 14 while the radiator support sub-frame is forward of the engine. The hood enclosure assembly is thus attached to the tractor chassis 12 both in front of the engine and behind the engine.

The latch mechanism 92 is actuated by a latch release handle 112 located on one side of the hood 22. The handle 112 forms a bell crank to which one end of a first link 116 is connected and is pulled by the release handle 112. The link 116 rotates a second bell crank 118 on the hood 22 to pull on a second link 120 that releases the latch mechanism 192. The release handle 112 and the links 116, 120 are all carried by the hood and are raised therewith. This provides the advantage of moving the latch release components from the side of the engine when the hood is raised to avoid blocking access to the engine.

When assembled to the vehicle chassis, the pivot posts 56 at the front of the stationary frame portion are received in upwardly open vertical slots 126 in the brackets 104, 106. The posts 56 define a second axis 128. The posts enable the hood to be tilted forward to a forward tilt position shown in Figure 6. The forward tilt position provides unencumbered vertical and side access to the engine, necessary when the engine is being removed from the tractor chassis 12. Movement of the hood to the forward tilt position is achieved by removing the bolts 52 attaching the rear cross member 42, and by removing the bolts 110 (Fig. 5) at the front of the stationary frame portion. This enables the stationary frame portion to rotate about the second axis 128 by raising the rear end of the assembly upward. The hood is first raised by releasing the latch mechanism before removing the bolts and tilting the assembly forward. Preferably, the open upper ends of the slots 126 will be closed after the pivot posts 56 are inserted therein to prevent removal of the pivot posts from the slots. Alternative pivot arrangements can be used to rotate the enclosure assembly to the forward tilt position. The pivot posts may be installed after the enclosure frame is mounted to the tractor chassis so that they can be inserted into an aperture rather than into an open ended slot.

The engine enclosure assembly of the present invention provides an assembly in which the hinge, latch assembly and assist springs are preset in position for proper alignment of the mating components prior to attachment of the enclosure assembly to the tractor chassis. This avoids a time consuming and difficult mounting procedures previously used to align the hinge and latch components as the enclosure is attached to the tractor chassis.

The invention should not be limited to the above-described embodiment, but should be limited solely by the claims that follow.

## Claims

1. An engine enclosure assembly for a vehicle having a chassis (12) and an engine (14) supported on the chassis (12), the assembly comprising:
an enclosure frame (30) having a stationary frame portion (32) and a movable frame portion (34), the stationary and movable frame portions (32, 34) being coupled to one another for rotational movement of the movable frame portion (34) relative to the stationary frame portion (32);
at least one lift assist spring (84, 86) coupled to the stationary and movable frame portions (32, 34) to urge the movable frame portion (34) to a raised position relative to the stationary frame portion (32);
a latch assembly holding the movable frame portion (34) in a closed position when latched, the latch assembly having a striker (90) mounted to one of the stationary and movable frame portions (32, 34) of the enclosure frame (30) and a latch mechanism (92) carried by the other of the stationary and movable frame portions (32, 34) and engagable with the striker (90) to hold the movable frame portion (34) in the closed position;
an enclosure hood (22) mounted to the movable frame portion (34); and
the stationary frame portion (32) having multiple mounting bosses for stationary mounting of the stationary frame portion (32) to the chassis (12) whereby the enclosure hood (22) is movable with the movable frame portion (34) between a closed position when the striker (90) is latched to the latch mechanism (92) and an open position when the striker (90) is released.

2. The engine enclosure assembly as defined by claim 1 wherein the striker (90) is mounted to the stationary frame portion (32) while the latch mechanism (92) is mounted to the movable frame portion (34).

3. The engine enclosure assembly as defined by claim 1 or 2 further comprising a latch release actuator (112) carried by the hood (22) remote from the latch mechanism (90).

4. The engine enclosure assembly as defined by one of the claims 1 to 3 further comprising a latch release handle (112) on one side of the engine enclosure hood (22) and coupled to the latch mechanism (92) by a linkage (116, 118, 120) to release the striker (90) and enable the movable frame portion (34) and the engine enclosure hood (22) to move to the open position.

5. The engine enclosure assembly as defined by one of the claims 1 to 4 wherein the lift assist spring (84, 86) is a gas cylinder.

6. The engine enclosure assembly as defined by one of the claims 1 to 5 wherein the stationary frame portion (32) includes four attachment points where the enclosure frame (30) is attached to the vehicle chassis (12).

7. The engine enclosure assembly as defined by one of the claims 1 to 6 wherein the chassis (12) includes a front radiator support (108) and the stationary frame portion (32) is adapted for attachment to the radiator support (108).

8. The engine enclosure assembly as defined by one of the claims 1 to 7 wherein the chassis (12) includes a rear hood support (100, 102) and the stationary frame portion (32) has two mounting bosses (50) for attachment to the rear hood support (100, 102).

9. The engine enclosure assembly as defined by one of the claims 1 to 8 further comprising a pivot attachment of the enclosure frame (30) to the vehicle chassis (12) whereby the enclosure frame (30) is rotatable to a forward tilt position when not stationarily attached to the vehicle chassis (12).

10. A vehicle comprising:
an engine (14);
a chassis (12) supporting the engine (14), the chassis (12) extending forward and rearward of the engine (14);
an engine enclosure assembly (24) mounted to the chassis (12), including
a stationary frame portion (32) adapted to be stationarily mounted to the chassis (12);
a movable frame portion (34) pivotally mounted to the stationary frame portion (32) for movement between open and closed positions;
a latch assembly operatively associated with the stationary and movable frame portions (32, 34) to hold the movable frame portion (34) in the closed position, the latch assembly being spaced from the pivotal coupling of the movable and stationary frame portions (34, 32); and
an engine enclosure hood (22) mounted to the movable frame portion (34) for movement therewith between open and closed positions.

11. The vehicle as defined by claim 10 wherein the stationary frame portion (32) is attached to the chassis (12) both forward and rearward of the engine (14).

12. The vehicle as defined by claim 10 or 11 wherein the stationary frame portion (32) is attached to the chassis (12) at two locations forward of the engine (14) and two locations rearward of the engine (14).

13. The vehicle as defined by one of the claims 10 to 12 further comprising at least one lift assist spring (84, 86) urging the movable frame portion (34) to the open position.

14. The vehicle as defined by one of the claims 10 to 13 wherein the stationary frame portion (32) is attached to the chassis (12) by bolts (52) and further comprising a pivot attachment of the stationary frame portion (32) to the chassis (12) whereby the stationary frame portion (32) is free to rotate relative to the chassis (12) when the bolts (52) are removed.

15. A vehicle comprising:
a chassis (12) supporting an engine (14);
an engine enclosure assembly (24) mounted to the chassis (12), including
a frame (32) fixed to the chassis (12); and
a hood (22) pivotally mounted to the frame (32) for rotation about a first axis (88);
the frame (32) being fixed to the chassis (12) by removable fasteners (52) and being pivotally attached to the chassis (12) for rotation about a second axis when the removable fasteners (52) are removed.

16. The vehicle as defined by one of the claims 10 to 15 comprising an engine enclosure according one of the claims 1 to 9.
